# EUROPEAN PATENT APPLICATION

(11) **EP 4 618 582 A1**
(43) Date of publication of application: **17.09.2025**
(21) Application number: 23888473.8
(22) Date of filing: 23.10.2023
(51) Int. Cl.: H04Q 9/00, F24F 11/46, F24F 11/47, F24F 11/54, F24F 11/64, H04M 11/00, H05B 47/115, H05B 47/165, H05B 47/175, F24F 120/10, F24F 120/12

(54) **OFFICE ENVIRONMENT CONTROL SYSTEM, OFFICE ENVIRONMENT CONTROL METHOD, AND PROGRAM**

(30) Priority: 11.11.2022 JP 2022181230; 06.04.2023 JP 2023061802
(71) Applicant: Panasonic Intellectual Property Management Co., Ltd., Kadoma-shi, Osaka 571-0057 (JP)
(72) Inventor: NAKAHARA, Tomoharu, Kadoma-shi, Osaka 571-0057 (JP); OKAICHI, Atsuo, Kadoma-shi, Osaka 571-0057 (JP); SUZUKI, Fumiaki, Kadoma-shi, Osaka 571-0057 (JP); HIGASHIKOZONO, Ikuma, Kadoma-shi, Osaka 571-0057 (JP); NOMURA, Kentaro, Kadoma-shi, Osaka 571-0057 (JP)
(74) Representative: Appelt, Christian W.
(86) International application number: PCT/JP2023/038131
(87) International publication number: WO 2024/101122

(57) **Abstract**

An office environment control system includes: a headcount manager (310) that counts and manages a headcount of people present in an office (99); a work area table manager (330) that sets potential work areas (98) in the office (99), and manages a work area table including a relationship between each of the potential work areas (98) set and environmental equipment and the number of seats, and one or more sequences indicating orders of usage; an inputter-outputter (320) that receives user input; a work area determiner (340) that determines work areas (98) to be used from among the potential work areas (98) based on the counted headcount, the work area table, and the user input; and an environment controller (350) that controls an environment of the determined work areas (98) to a first environment and controls an environment outside the work areas (98) to a second environment that consumes less power than the first environment.

## Description

### [Technical Field]

The present disclosure relates to an office environment control system, an office environment control method, and a program.

### [Background Art]

In recent years, from the perspective of the liberalization of work styles, a "hot desking" work system has been proposed. In this type of work system, each user is free to select their preferred area and perform their work. Patent Literature (PTL) 1 discloses a facility control system for offices using a hot desking work system, for controlling facilities related to such a hot desking work system.

### [Citation List]

### [Patent Literature]

[PTL 1] Japanese Unexamined Patent Application Publication No. 2011-4047

### [Summary of Invention]

### [Technical Problem]

However, in conventional hot desking work systems, there have been cases where the control of the environment within the office was not appropriate.

In view of the above, the present disclosure has an object to provide an office environment control system and the like that can control the environment more appropriately.

### [Solution to Problem]

An office environment control system according to one aspect of the present disclosure includes: a headcount manager that counts and manages a headcount of people present in an office; a work area table manager that sets potential work areas in the office, and manages a work area table including: a relationship between each of the potential work areas set and environmental equipment in the office; a number of seats in each of the potential work areas set; and one or more sequences each of which indicates an order of usage of each of the potential work areas set; an inputter-outputter that receives a user input of a selection of a system mode of operation and a work area density; a work area determiner that determines one or more work areas to be used from among the potential work areas based on the headcount of people present counted, the work area table, the system mode of operation selected by user input, and the work area density selected by user input; and an environment controller that controls an environment of the one or more work areas determined to a first environment and controls an environment outside the one or more work areas to a second environment that consumes less power than the first environment, the first environment and the second environment being predetermined.

An office environment control method according to one aspect of the present disclosure includes: counting and managing a headcount of people present in an office; setting potential work areas in the office, and managing a work area table including: a relationship between each of the potential work areas set and environmental equipment in the office; a number of seats in each of the potential work areas set; and one or more sequences each of which indicates an order of usage of each of the potential work areas set; receiving a user input of a selection of a system mode of operation and a work area density; determining one or more work areas to be used from among the potential work areas based on the headcount of people present counted, the work area table, the system mode of operation selected by user input, and the work area density selected by user input; and controlling an environment of the one or more work areas determined to a first environment and controlling an environment outside the one or more work areas to a second environment that consumes less power than the first environment, the first environment and the second environment being predetermined.

One aspect of the present disclosure can be implemented as a program that causes a computer to execute the office environment control method described above. Alternatively, the program can be realized as a computer-readable non-transitory recording medium on which the program is stored.

### [Advantageous Effects of Invention]

According to the present disclosure, the environment can be controlled more appropriately.

### [Brief Description of Drawings]

[FIG. 1]

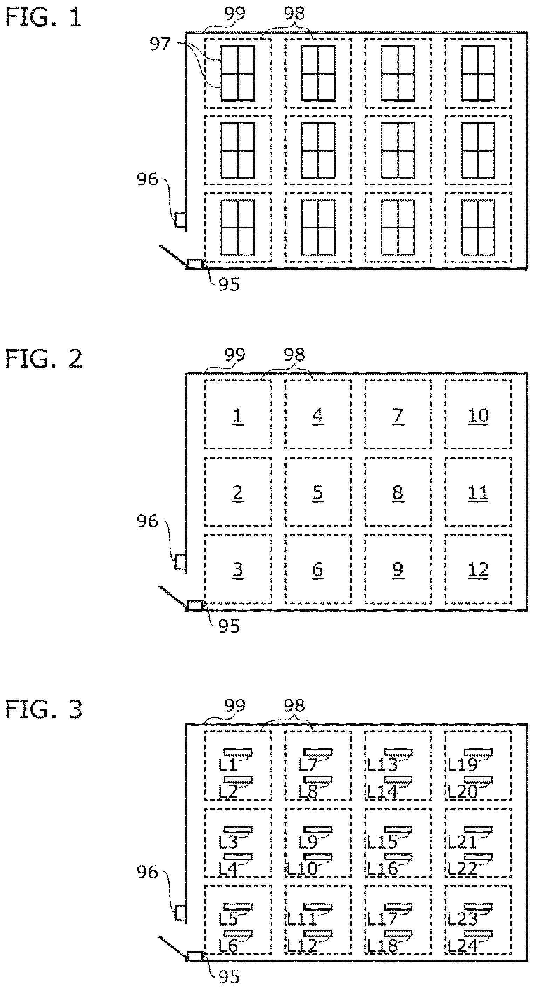

   FIG. 1 illustrates an example of an office to which an office environment control system according to an embodiment of the present disclosure is applied.
[FIG. 2]
   FIG. 2 is for explaining work areas in an office according to an embodiment of the present disclosure.
[FIG. 3]
   FIG. 3 is for explaining work areas in an office according to an embodiment of the present disclosure.
[FIG. 4]

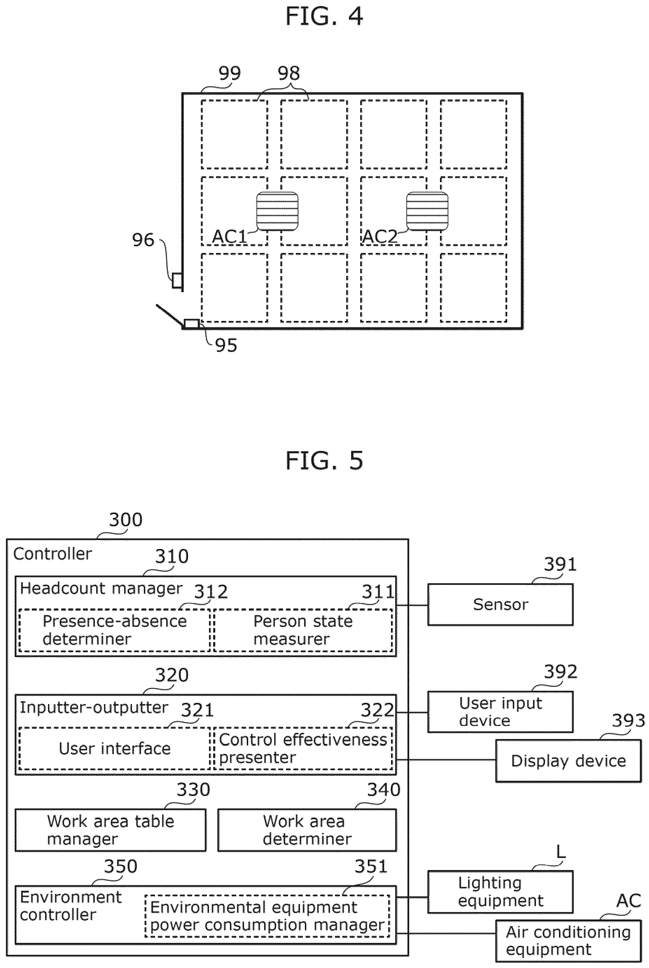

   FIG. 4 is for explaining work areas in an office according to an embodiment of the present disclosure.
[FIG. 5]
   FIG. 5 is a block diagram illustrating the functional configuration of an office environment control system according to an embodiment of the present disclosure.
[FIG. 6]

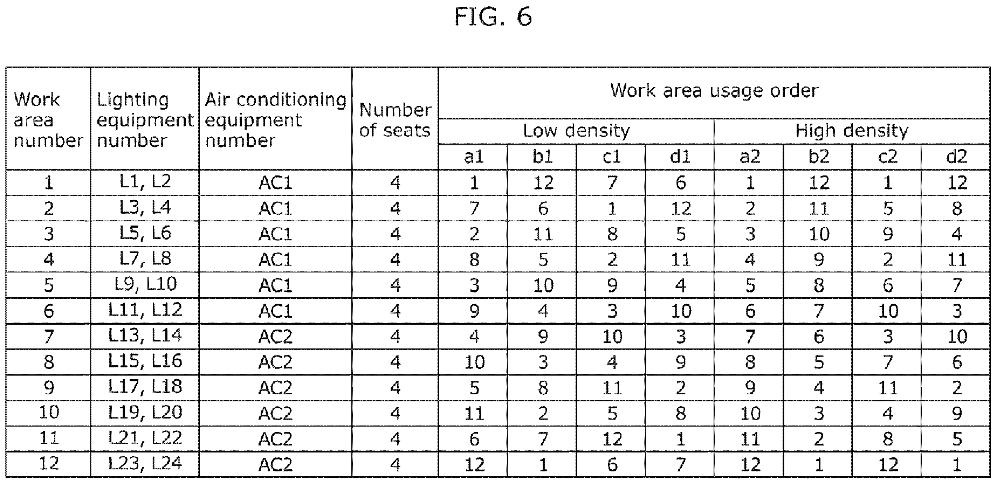

   FIG. 6 illustrates an example of a work area table according to an embodiment of the present disclosure.
[FIG. 7]

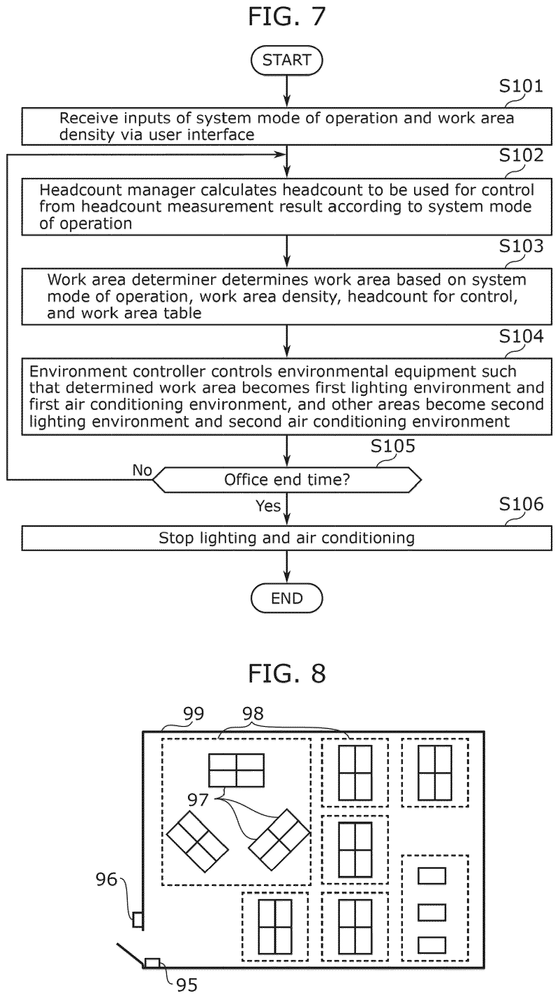

   FIG. 7 is a flowchart illustrating operations performed by an office environment control system according to an embodiment of the present disclosure.
[FIG. 8]
   FIG. 8 illustrates an example of an office to which an office environment control system according to another example of an embodiment of the present disclosure is applied.
[FIG. 9]

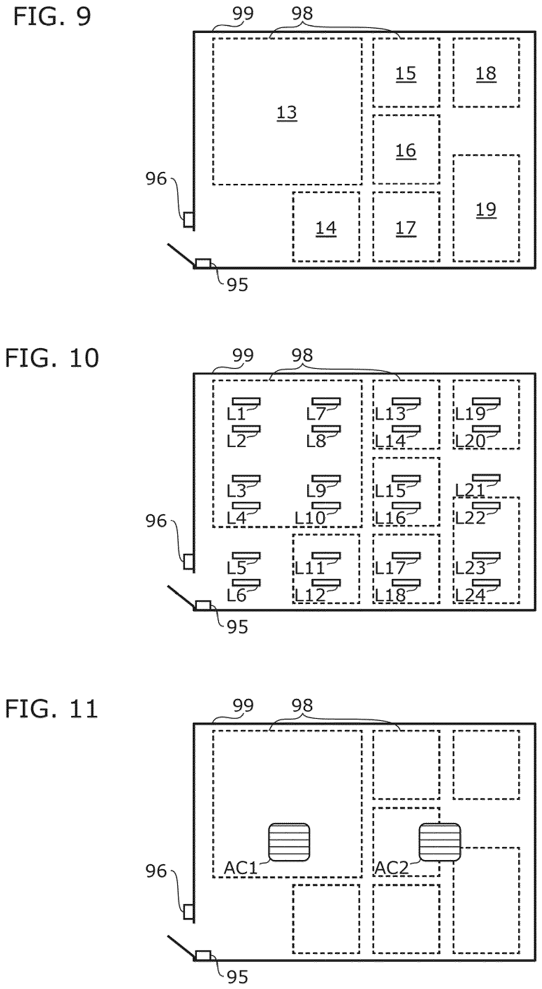

   FIG. 9 is for explaining work areas in an office according to another example of an embodiment of the present disclosure.
[FIG. 10]
   FIG. 10 is for explaining work areas in an office according to another example of an embodiment of the present disclosure.
[FIG. 11]
   FIG. 11 is for explaining work areas in an office according to another example of an embodiment of the present disclosure.
[FIG. 12]

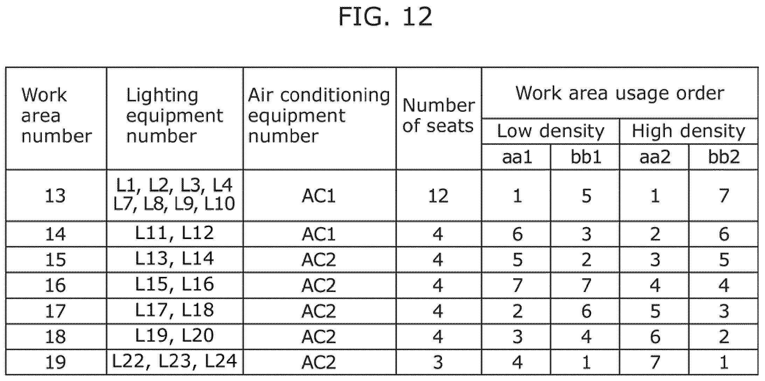

   FIG. 12 illustrates an example of a work area table according to another example of an embodiment of the present disclosure.
[FIG. 13]

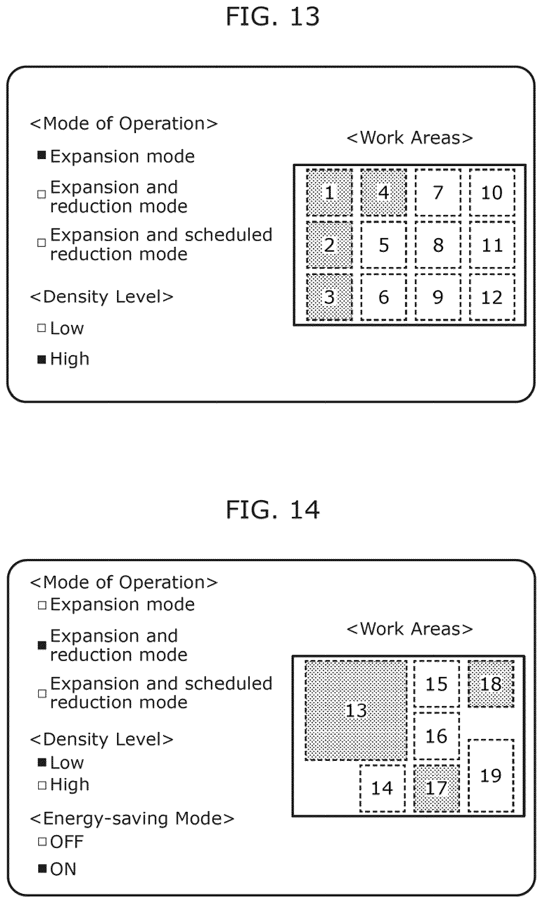

   FIG. 13 illustrates an example of an input-output screen according to another example of an embodiment of the present disclosure.
[FIG. 14]
   FIG. 14 illustrates an example of an input-output screen according to an embodiment of the present disclosure.
[FIG. 15]

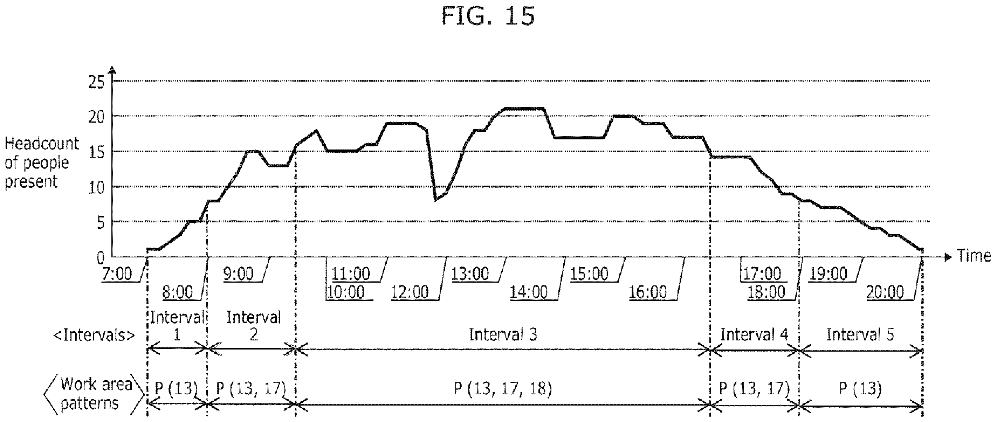

   FIG. 15 illustrates an example of operations performed by an office environment control system according to an embodiment of the present disclosure for one day.
[FIG. 16]

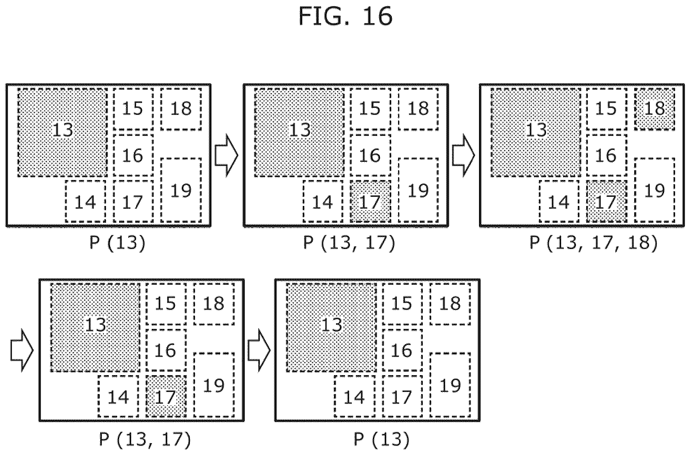

   FIG. 16 is a layout diagram of work areas and non-work areas for each work area pattern in FIG. 15.
[FIG. 17]

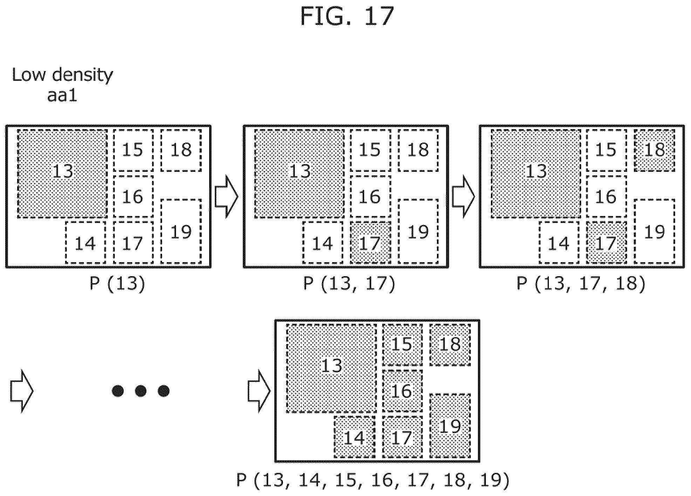

   FIG. 17 illustrates an example of work area patterns that follow the order of usage of the work areas according to an embodiment of the present disclosure.
[FIG. 18]

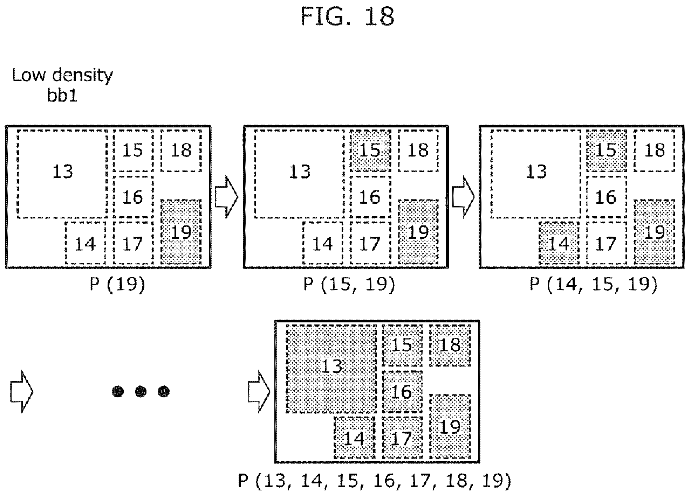

   FIG. 18 illustrates an example of work area patterns that follow the order of usage of the work areas according to an embodiment of the present disclosure.
[FIG. 19]

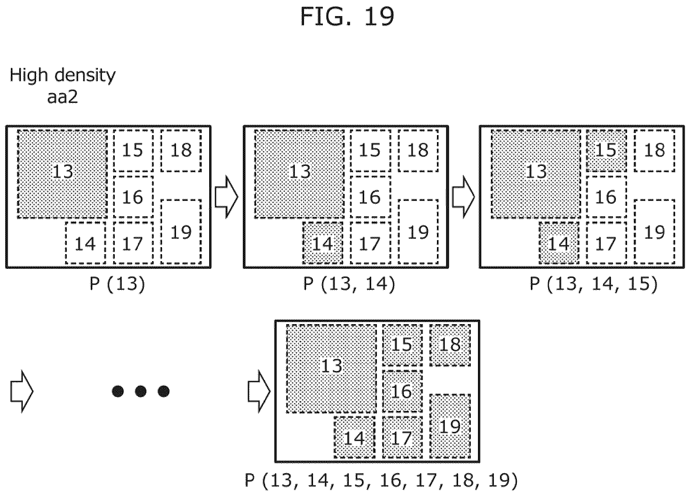

   FIG. 19 illustrates an example of work area patterns that follow the order of usage of the work areas according to an embodiment of the present disclosure.
[FIG. 20]

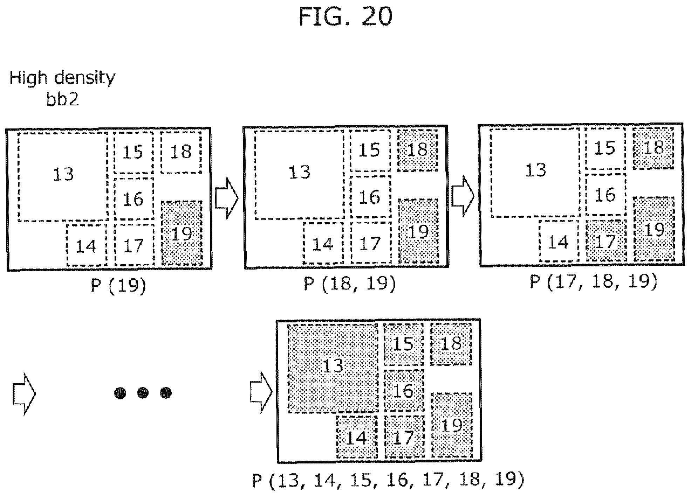

   FIG. 20 illustrates an example of work area patterns that follow the order of usage of the work areas according to an embodiment of the present disclosure.
[FIG. 21]

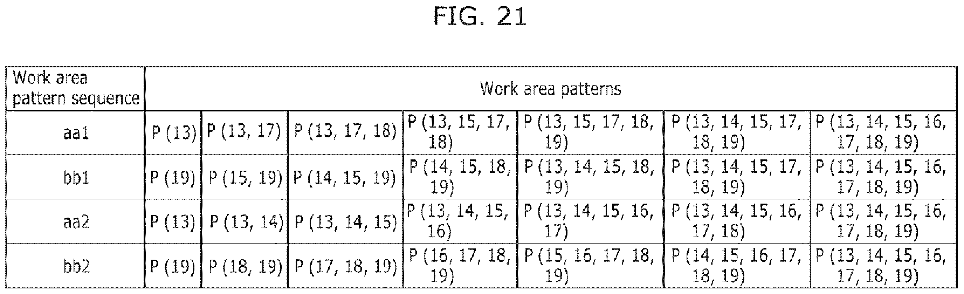

   FIG. 21 illustrates the relationship between work area pattern sequences and work area patterns according to an embodiment of the present disclosure.
[FIG. 22]

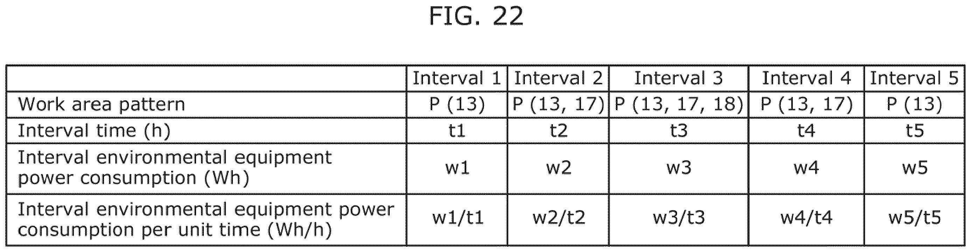

   FIG. 22 illustrates the relationship between work area patterns and power consumption of environmental equipment per unit time according to an embodiment of the present disclosure.
[FIG. 23]

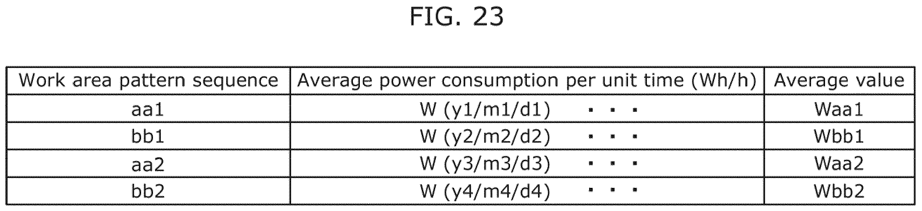

   FIG. 23 illustrates the average power consumption per unit time for each work area pattern sequence according to an embodiment of the present disclosure.
[FIG. 24]

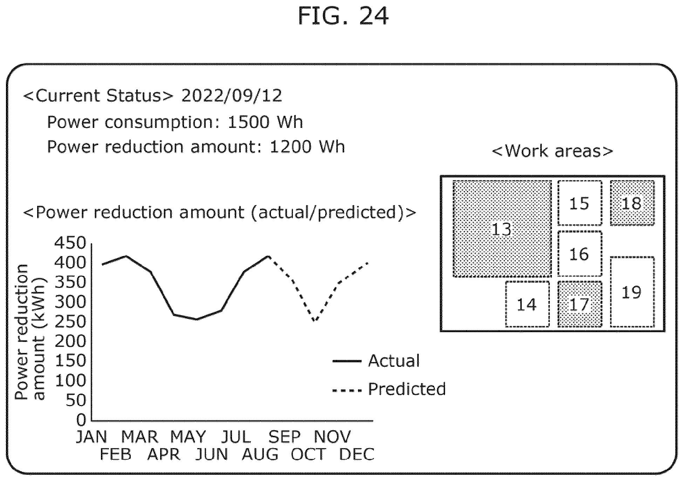

   FIG. 24 illustrates an example of a display of the location of work areas according to an embodiment of the present disclosure.
[FIG. 25]

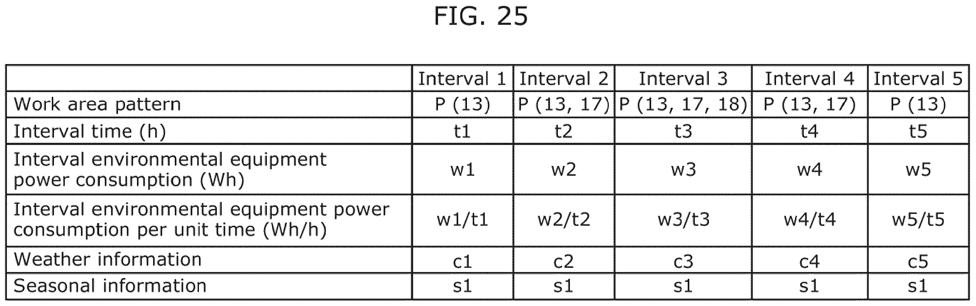

   FIG. 25 illustrates the relationship between power consumption of environmental equipment per unit time for an interval, weather information, and seasonal information according to an embodiment of the present disclosure.
[FIG. 26]

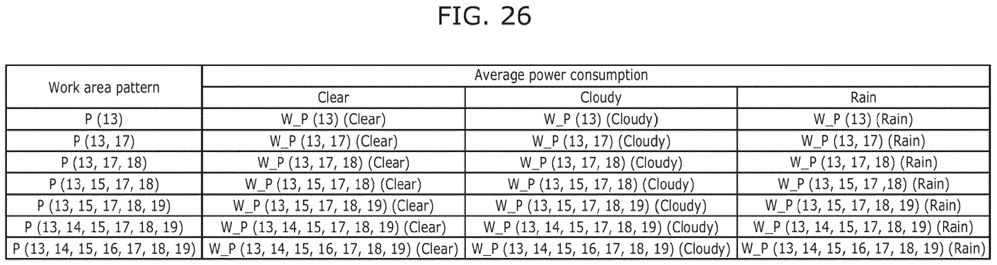

   FIG. 26 illustrates the average power consumption under a certain condition according to an embodiment of the present disclosure.
[FIG. 27]

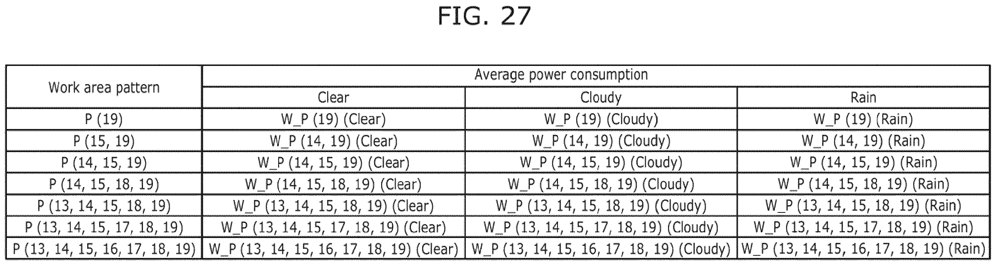

   FIG. 27 illustrates the average power consumption under a certain condition according to an embodiment of the present disclosure.
[FIG. 28]

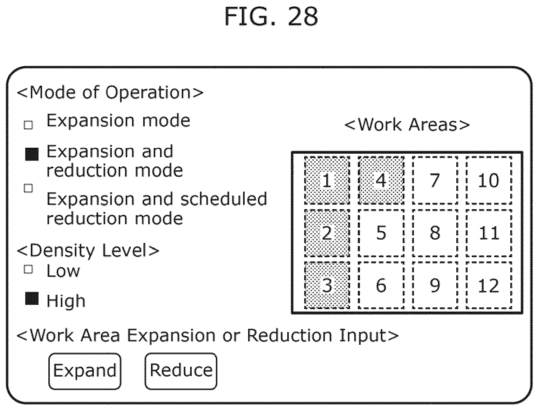

   FIG. 28 illustrates an example of a display screen of a user input device according to an embodiment of the present disclosure.
[FIG. 29]

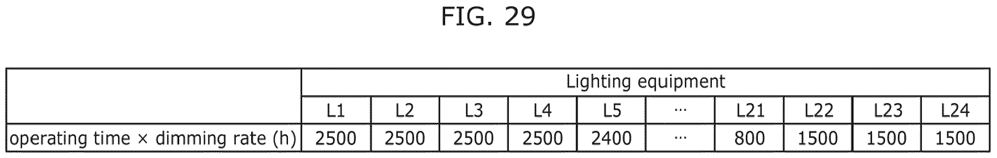

   FIG. 29 illustrates an example of the effective operating time of lighting equipment according to an embodiment of the present disclosure.
[FIG. 30]

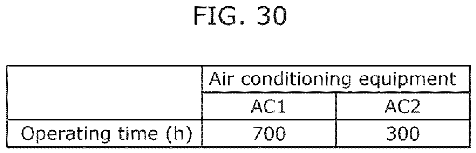

   FIG. 30 illustrates an example of the operating time of air conditioning equipment according to an embodiment of the present disclosure.
[FIG. 31]

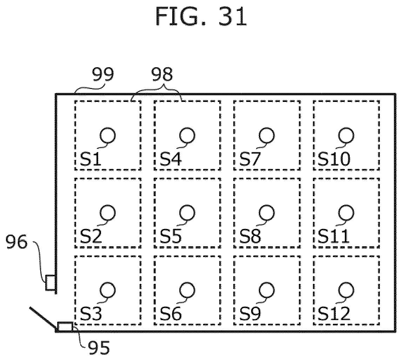

   FIG. 31 is for explaining work areas in an office according to an embodiment of the present disclosure.

### [Description of Embodiments]

The following describes in detail an office environment control system and the like according to an embodiment of the present disclosure with reference to the drawings. The embodiment described below is merely one specific example of the present disclosure. The numerical values, shapes, materials, elements, and arrangement and connection of the elements, steps, order of the steps, etc., indicated in the following embodiment are given merely by way of illustration and are not intended to limit the present disclosure. Therefore, among elements in the following embodiments, those not recited in any of the independent claims are described as optional elements.

Note that the figures are schematic illustrations and are not necessarily precise depictions. Accordingly, the figures are not necessarily to scale. In the figures, elements that are essentially the same share the same reference signs, and repeated description may be omitted or simplified.

### EMBODIMENT

### Configuration

In the embodiment described below, in an office with a hot desking work system, the office is divided into a plurality of potential work areas, and the number and arrangement of work areas to be used among the potential work areas are determined according to a headcount of people present in the office. Here, an example will be described in which areas determined as work areas are controlled to a first environment suitable for work, and other areas are controlled to a second environment with less energy consumption (or power consumption) than the first environment in order to achieve energy savings for the entire office while maintaining the satisfaction of the workers (also referred to as users or office workers) with their work environment.

Hereinafter, an overview will be given in greater detail. As described in the background art section, how offices are used has shifted from a fixed seating arrangement to a hot desking arrangement. With the rise of activity-based working (ABW) and COVID-19, work styles such as remote work have also become widespread, leading to an increasing number of situations where the number of people working in the office fluctuates from day to day. However, despite the small number of occupants (headcount of people present), there are situations where the energy usage per occupant increases due to all the lighting in the office being turned on and air conditioning being applied uniformly throughout the office so as not to compromise the comfort of the users. From the perspective of combating global warming, it is necessary to reduce energy consumption derived from fossil fuels, so the above situation is not appropriate.

Conventionally, for example, as disclosed in PTL 1, it is described that energy saving is implemented by determining the work areas according to the headcount of people present in the office, gathering the office workers in the work areas, and turning equipment on in the work areas and off in the non-work areas. However, with such a measure, when equipment in non-work areas is turned off, it creates a less pleasant office atmosphere, reducing the office workers' satisfaction with their work environment. While this approach can lower power consumption, it may also risk decreasing office worker productivity.

Stated differently, when conventional control is implemented, there may be issues such as the inability to ensure a safe level of brightness in non-work areas, resulting in a dull office environment that reduces motivation, or discomfort when moving between work and non-work areas due to temperature differences.

In view of this, the present disclosure has an object to set the work areas to be sized in accordance with the headcount of people present in the office, and to make the environment (lighting, air conditioning) within the set work areas suitable for work. In other areas, while taking care to not compromise the safety and comfort of office workers, consumption of energy for maintaining the environment is lowered compared to the work areas. This approach reduces overall energy use in the office for maintaining the environment without compromising the productivity of the office workers. The present disclosure also mentions managing the usage history of environmental equipment (such as lighting equipment and air conditioning equipment) in the office to reduce usage bias. This approach helps ensure the continued use of the environmental equipment up to an appropriate lifespan.

### Implementation Example 1

FIG. 1 illustrates an example of an office to which the office environment control system according to the embodiment is applied. FIG. 1 illustrates a floor plan of office 99 as an example of the office to which the office environment control system is applied. FIG. 1 illustrates that a plurality of furnishings 97 are arranged in office 99, and that a portion of furnishings 97 belong to potential work areas 98.

The present invention, as described above, offers energy-saving benefits when used in a hot desking office where the headcount of people present in office 99 is managed and there are no fixed seating arrangements. Entry card reader 96 and exit card reader 95 are installed at the entrance of this office 99 for security management, allowing the headcount of people present to be known. A plurality of furnishings 97 for office work are arranged in the room, which has a hot desking arrangement where office workers can select any seat. Potential work areas 98 for use in environmental equipment control are set based on the arrangement of furnishings 97. Note that when a potential work area 98 is selected for use, it becomes a work area, so it may be expressed as work area 98.

FIG. 2 through FIG. 4 are for explaining work areas in an office according to the embodiment. FIG. 2 omits the illustration of furnishings 97 from the floor plan of FIG. 1, and instead, reference numerals 1 to 12 are assigned to identify each potential work area 98. For example, potential work area 1 is also one of potential work areas 98.

Potential work area 98 used in this implementation example does not refer to an area physically enclosed by walls or partitions, but rather indicates a conceptual location within the space of office 99 that is controlled to have an environment suitable for work. Here, FIG. 3 illustrates the positional relationship between potential work areas 98 and lighting equipment L (see FIG. 5 to be described later), and FIG. 4 illustrates the positional relationship between potential work areas 98 and air conditioning equipment AC (see FIG. 5 to be described later). FIG. 3 omits the illustration of furnishings 97 from the floor plan of FIG. 1, and instead shows the positional relationship between potential work areas 98 and lighting equipment L1 to L24. FIG. 4 omits the illustration of furnishings 97 from the floor plan of FIG. 1, and instead shows the positional relationship between potential work areas 98 and air conditioning equipment AC1 and AC2.

In this implementation example, potential work areas 98 are selected (determined) as work areas 98 to be used according to the headcount of people present, and energy savings are achieved by controlling the selected work areas 98 to a first environment suitable for work and controlling potential work areas 98 not selected to a second environment with less power consumption than the first environment. Here, the second environment consumes less power than the first environment, but the second environment still consumes some power. More specifically, in the second environment, the environmental equipment is controlled to consume the minimum necessary power while taking care to not compromise the safety and comfort of office workers.

FIG. 5 is a block diagram illustrating the functional configuration of the office environment control system according to the embodiment. The main components of the office environment control system described below are realized by controller 300 and various devices for inputting and outputting information to and from control unit 300. Controller 300 is realized, for example, by an information processing server such as a cloud server, and is implemented by a processor, memory, and an application program executed using the processor and memory. Controller 300 includes headcount manager 310, inputter-outputter 320, work area table manager 330, work area determiner 340, and environment controller 350.

Headcount manager 310 accumulates the headcount of people present in office 99 (hereinafter also simply referred to as the headcount) measured by external sensor 391. When the headcount increases, headcount manager 310 calculates the maximum headcount. When the headcount decreases, headcount manager 310 determines the headcount decrease and calculates a representative headcount value for that decrease. Headcount manager 310 transmits headcount information for control that is in accordance with the system's mode of operation to work area determiner 340. In this implementation example, entry card reader 96 and exit card reader 95 for security management that are installed at the entrance are used as external sensor 391 to measure the headcount, but some other sensing means for headcount measurement may be used. Other examples of measurement means include a headcount sensor installed at the entrance for counting how many people pass through, a sensor that detects radio wave signals from mobile phones or beacons, and cameras for measuring the headcount of people present in a room. The relationship between three types of system modes of operation and the corresponding headcount information for control used in those modes is described below. Person state measurer 311 and presence-absence determiner 312 will be described later. In this implementation example, person state measurer 311 and presence-absence determiner 312 are not essential elements.
(1) Work area expansion mode: performs only work area expansion processing when the headcount increases, and maintains the state of the work area as -is when there the headcount decreases. Here, the headcount to be used for control is set to be the maximum headcount between the start and end of control during a day. In other words, the maximum headcount is reset each day.
(2) Work area expansion and reduction mode: performs work area expansion processing when the headcount increases, and work area reduction processing when the headcount decreases. Here, when the headcount increases, the headcount to be used for control is set to be the maximum headcount from the start of control during a day, and when the headcount decreases, the headcount to be used for control is set to be a representative value within the interval where the decrease continues for a fixed period of time. For example, the average headcount within the decrease interval or the headcount at the end of the decrease interval is used as the representative value.
(3) Work area expansion and scheduled reduction mode: performs work area expansion processing when the headcount increases, and performs work area reduction processing only when conditions are met at a predetermined specified time when the headcount decreases. When the headcount increases, the headcount to be used for control is set to be the maximum headcount from the start of control during the day, and when the headcount decreases, only when the headcount decrease continues for a fixed period of time at a predetermined specified time, the headcount to be used for control is set a representative value of the headcount within the interval corresponding to that time. For example, the average headcount within the decrease interval or the headcount at the end of the decrease interval is used as the representative value.

Work area table manager 330 manages the work area table. The work area table includes, for each potential work area 98, a relationship with lighting equipment L and air conditioning equipment AC belonging to potential work area 98, the number of seats in the work area, and a plurality of sequences, each indicating the order of usage of each of the work areas, corresponding to each density level.

FIG. 6 illustrates an example of a work area table according to the embodiment. The density level indicates whether, when expanding (i.e., increasing) work areas 98 to be used at a certain point in time, potential work areas 98 are selected from those near in-use work areas 98, or from those far from in-use work areas 98, among potential work areas 98. When selecting nearby work areas 98, a usage order with a high density level ("high density") is selected, and when selecting work areas 98 that are far apart, a usage order with a low density level ("low density") is selected.

When a lot of group work is done where office workers need to collaborate with others, a high-density level is selected. Conversely, when many office workers prefer to focus on individual tasks without distractions, a low-density level is selected. This flexibility allows the environment to be tailored to the type of work being done. This improves the efficiency of office work (tasks). The work area table is preset by the system administrator, but it can be adjusted to reflect changes in the arrangement of furnishings 97 and user preferences regarding work area usage order for each density level.

Inputter-outputter 320 includes user interface 321 and control effectiveness presenter 322. User interface 321 receives, from user input device 392, the system's mode of operation and a user's requested density level, which are required by work area determiner 340 to determine the work area usage order. Control effectiveness presenter 322 and display device 393 will be described later. In this implementation example, control effectiveness presenter 322 and display device 393 are not essential elements.

Work area determiner 340 first selects one sequence from the work area usage order sequences corresponding to the density level input by the user, and then compares the sum of the number of seats in potential work areas 98 currently in use plus a seat margin with the headcount for control that is calculated by headcount manager 310. According to the mode of operation selected by the user, if it is determined that there is a shortage of seats, the range of work areas 98 to be used is expanded (or the number of work areas 98 is increased) following the selected work area usage order until the number of seats is sufficient. If there are too many seats, the range of work areas 98 to be used is reduced (or the number of work areas 98 is decreased) following the selected work area usage order until it satisfies the headcount for control.

The seat margin is a value that is set in advance. A seat margin is used to increase user satisfaction by providing greater seating capacity and a wider selection of seats for users, as well as to prevent a shortage of work seats due to errors in headcount measurement or delays in environmental equipment operation.

Environment controller 350 controls the environmental equipment such that the environment of work areas 98 determined to be used by work area determiner 340 becomes a first environment suitable for work, and the environment of other areas not determined to be used becomes a second environment where power consumption for maintaining the environment is less than that of the first environment while taking care to not compromise the safety and comfort of office workers. Here, lighting equipment L and air conditioning equipment AC are shown as examples of environmental equipment. Note that lighting equipment L is a term that comprehensively refers to lighting equipment L1 to L24. Similarly, air conditioning equipment AC is a term that comprehensively refers to air conditioning equipment AC1 and AC2.

As described above, in addition to controlling lighting equipment, environment controller 350 also includes the function of controlling air conditioning equipment. Environment controller 350 controls the lighting equipment and air conditioning equipment such that work areas 98 become a first lighting environment and a first air conditioning environment suitable for work, and the other areas not determined to be used become a second lighting environment and a second air conditioning environment where power consumption for maintaining the environment is less than that of the first lighting environment and the first air conditioning environment while taking care to not compromise the comfort of office workers. Preferable examples of the first lighting environment, the first air conditioning environment, the second lighting environment, and the second air conditioning environment are as follows.

First lighting environment: desk surface illuminance = 500 lux.

First air conditioning environment: predicted mean vote (PMV) = -0.5 to 0.5. More preferably, PMV = 0.

Second lighting environment: floor surface illuminance = 150 lux.

Second air conditioning environment: PMV = 0.5 to 1 in summer, PMV = -1 to -0.5 in winter.

The first lighting environment is a bright environment suitable for working, so it can be easily distinguished by its brightness from the slightly darker second lighting environment, and people entering the room can be guided to work area 98 illuminated by the first lighting environment. Furthermore, in the second lighting environment, by configuring lighting equipment L to enable illumination of wall surfaces and pillar surfaces, the perceived brightness can be increased, thereby enhancing office worker comfort.

Environment controller 350 can reduce the amount of power consumed by lighting equipment L by dimming both the first lighting environment and the second lighting environment during periods when office 99 is not used for work, such as during lunch breaks, and still maintain the relationship where the illuminance of the first lighting environment is brighter than the illuminance of the second lighting environment. Note that environmental equipment power consumption manager 351 included in environment controller 350 will be described later. In this implementation example, environmental equipment power consumption manager 351 is not an essential element.

Next, operations performed by the office environment control system configured as described above will be explained. Stated differently, the flow of processes performed by controller 300 will be explained. FIG. 7 is a flowchart illustrating operations performed by the office environment control system according to the embodiment.

First, inputter-outputter 320 receives input of the system mode of operation and work area density via user interface 321 (S101). Next, external sensor 391 measures a headcount of people present in the office by sensing, and outputs the headcount measurement result. Headcount manager 310 obtains the output headcount measurement result, and calculates a headcount to be used for control from the headcount measurement result (S102). The obtainment of the headcount measurement result and calculation of the headcount to be used for control in step S102 is one example of the counting and managing of the headcount of people present in office 99. Here, headcount manager 310 performs calculation in accordance with the system mode of operation. Next, work area determiner 340 determines one or more work areas based on the system mode of operation, the work area density, the headcount for control, and the work area table (S103). At this time, work area determiner 340 reads out and uses the work area table that is managed in the work area table manager. Next, environment controller 350 controls the environmental equipment such that the one or more determined work areas become the first lighting environment and the first air conditioning environment, and other areas become the second lighting environment and the second air conditioning environment (S104). When a predetermined office end time is reached (Yes at S105), the day's control is concluded, and the lighting and air conditioning are stopped (S106). If it is not the office end time (No at S105), steps S102 to S104 are repeatedly performed.

Next, an example of office 99 with a layout different from FIG. 1 will be given. FIG. 8 illustrates an example of an office to which the office environment control system according to another example of the embodiment is applied. Similar to FIG. 2 through FIG. 4, FIG. 9 illustrates reference numerals for identifying potential work areas 98 according to this other example, FIG. 10 illustrates the positional relationship between potential work areas 98 and lighting equipment L, and FIG. 11 illustrates the positional relationship between potential work areas 98 and air conditioning equipment AC. In this other example, although the arrangement of furnishings 97 differs from the example illustrated in FIG. 1, even with such a furnishing arrangement, a work area table can be created as illustrated in FIG. 12, and can be controlled by the present system. FIG. 12 illustrates that by using the work area table, work areas can be set to any size at any position, thereby enabling adaptation to any furnishing arrangement.

An information processing terminal such as a tablet PC, for example, is used as the user input device. An example of an input-output screen is illustrated in FIG. 13. FIG. 13 illustrates an example of an input-output screen according to another example of the embodiment. The illustrated input-output screen receives input of the system mode of operation and the work area density, and by indicating the locations of the currently determined work areas, can convey the locations of the work areas to the user in an easily understandable manner.

### Implementation Example 2

Next, Implementation Example 2 will be described. Office 99 in this implementation example is the same as office 99 illustrated in FIG. 8. The functional configuration of the office environment control system in this implementation example is the same as that illustrated in FIG. 5. Environment controller 350 in this implementation example includes environmental equipment power consumption manager 351. Environmental equipment power consumption manager 351 manages the operating time and power consumption of each item of environmental equipment connected to this system. Inputter-outputter 320 in this implementation example includes control effectiveness presenter 322. Control effectiveness presenter 322 displays the power consumption and power reduction amount during operation on display device 393. Presenting the power consumption and power reduction amount during operation to the user is convenient for the user. By using the power consumption per unit time for each work area usage order of the work area densities, which is calculated using power consumption data accumulated during operation, work area determiner 340 can select the work area usage order with low power consumption, thereby enhancing energy-saving effects.

In user interface 321 included in inputter-outputter 320, the system's mode of operation, a user's requested density level, and an energy-saving mode selection, which are required by work area determiner 340 to determine the work area usage order, are received from the user input-output screen illustrated in FIG. 14. FIG. 14 illustrates an example of an input-output screen according to the embodiment.

When the system is operating, environmental equipment power consumption manager 351 calculates the power consumption per unit time for each used work area pattern, and calculates the average power consumption for each work area pattern sequence, which is a sequence of the work area patterns arranged in order of usage.

FIG. 15 illustrates an example of operations performed by the office environment control system according to the embodiment for one day. Hereinafter, this implementation example will be described with reference to FIG. 15. FIG. 15 illustrates an operation example where the system mode of operation is the "work area expansion and reduction mode", and the density level is "low density", which are assumed to have been selected by the user. FIG. 16 is a layout diagram of work areas and non-work areas for each work area pattern in FIG. 15. In FIG. 16, the shaded portions indicate work areas, and the unshaded portions indicate non-work areas. Hereinafter, in the figures showing work area patterns, the shaded portions indicate work areas, and the unshaded portions indicate non-work areas.

In the work area table of FIG. 12 corresponding to the office layout illustrated in FIG. 8, there are two work area usage orders that satisfy low density, "aa1" and "bb1", but in this implementation example, it is assumed that the first one is selected by default until operational data is accumulated. Stated differently, "aa1" is selected. The graph in FIG. 15 illustrates the transition in the headcount of people present over time throughout a day, and each interval in the figure indicates a period during which the work area pattern selected according to the work area usage order remains continuously the same. Stated differently, this indicates that within a given interval, the work area pattern remains constant without change. Here, a work area pattern indicates the combination of work areas 98 selected within that interval. The work area pattern is displayed as "P()", with the selected work area numbers (reference numerals in FIG. 15) shown within the parentheses, separated by commas. In this implementation example, since there are seven work areas, the number of work area patterns is 121.

As illustrated in below the graph in FIG. 15, in intervals 1 to 3 where the number of people primarily increases, work areas 98 increase from P(13) to P(13, 17, 18), and in intervals 4 to 5 where the number of people primarily decreases, work areas decrease from P(13, 17) to P(13). Each of FIG. 17 through FIG. 20 illustrates work area patterns arranged according to a work area usage order indicated in the work area table. Each of FIG. 17 through FIG. 20 illustrates and example of work area patterns that follow an order of usage of the work areas according to the embodiment. Note that FIG. 17 corresponds to the example illustrated in FIG. 16. As illustrated in FIG. 17 through FIG. 20, potential work areas are determined as work areas in different patterns according to the work area usage order. Here, a sequence of work area patterns arranged according to work area usage order is referred to as a work area pattern sequence. FIG. 21 illustrates a compilation of work area pattern sequences and work area patterns. FIG. 21 illustrates the relationship between work area pattern sequences and work area patterns according to the embodiment.

Environmental equipment power consumption manager 351 measures the duration of each interval and the environmental equipment power consumption within each interval. Environmental equipment power consumption manager 351 divides the environmental equipment power consumption by the duration to calculate the environmental equipment power consumption per unit time, and associates it with the work area pattern selected in that interval. The operating time per item of environmental equipment is also accumulated based on each item of environmental equipment used in each interval and the duration of each interval. Regarding lighting equipment, in addition to the operating time, a value obtained by multiplying the operating time by the dimming rate is also stored. Hereinafter, the product of the operating time multiplied by the dimming rate will be referred to as the effective operating time. The relationship between work area patterns and power consumption of environmental equipment per unit time is shown in FIG. 22. FIG. 22 illustrates the relationship between work area patterns and power consumption of environmental equipment per unit time according to the embodiment.

FIG. 23 illustrates the average power consumption per unit time for each work area pattern sequence according to the embodiment. The power consumption of environmental equipment per unit time for each interval is averaged across all intervals, and this is taken as the average power consumption of the work area pattern sequence. In this implementation example, since work area pattern sequence aa1 is selected, time-stamped data is accumulated as the average power consumption of aa1. In this way, as illustrated in FIG. 23, the average power consumption per unit time for each work area pattern sequence is accumulated for each day of operation. These accumulated average power consumption values per unit time can be averaged per day, and this average value can be used to compare the power consumption states of each work area pattern.

The power consumption data of each item of environmental equipment is obtained by environment controller 350 periodically querying the power consumption from each item of environmental equipment. Alternatively, a data table of power consumption per unit time may be held for each item of environmental equipment in advance, and the power consumption may be calculated from the operating time of each item of environmental equipment.

Work area determiner 340 compares the headcount to be used for control that is calculated from the counted headcount, with a number of seats obtained by adding the seat margin to the total number of seats in the currently selected work areas 98, and determines whether there is an excess or shortage of seats. Next, based on the mode of operation and density level input via user interface 321, a work area usage order corresponding to the work area density is selected from the work area table.

Next, if the energy-saving mode is selected (if the energy-saving mode is enabled), the average power consumption of the work area pattern sequence corresponding to the work area usage order is referenced, and the work area usage order with low average power consumption is selected to determine the work area. As illustrated in the input-output screen in FIG. 14, when the density level is "low" and the energy-saving mode is selected, according to the work area table illustrated in FIG. 12, work area usage orders aa1 and bb1 are selected as candidates, and referring to FIG. 23, the work area usage order with the lower average power consumption among these candidates is determined. In cases where the energy-saving mode is not selected (if the energy-saving mode is disabled), aa1 described earlier may be selected by default, or aa1 and bb1 may be used alternately.

In control effectiveness presenter 322 included in inputter-outputter 320, using the current power consumption data and past time-series power consumption data managed by environmental equipment power consumption manager 351, display device 393 is used to show all or some of the power consumption and power reduction amount, or the time-series progression of power consumption and power reduction amount, or the outlook for future power consumption and power reduction amount, making it easier for the user to recognize the system's effectiveness and improving convenience. The power reduction amount may be set based on the power consumption when all environmental equipment is operated at full capacity, or may be set based on the actual results from the previous year. Display device 393 may be a digital signage device located in office 99, or may be displayed on a display module of a personal computer or tablet PC used by a user in office 99.

Control effectiveness presenter 322 may indicate the location of the currently determined work areas 98 on display device 393. An example of a display is illustrated in FIG. 24. FIG. 24 illustrates an example of a display of the location of work areas according to the embodiment. The display example in FIG. 24 shows the current power consumption and power reduction amount, the actual and predicted time-series of the power reduction amount, and the currently active work areas. In the power reduction amount graph, the solid line indicates actual results and the dashed line indicates predictions, allowing for a comprehensive recognition of the annual power reduction amount using both actual and predicted values.

### Implementation Example 3

Next, Implementation Example 3 will be described. In this implementation example, a configuration for enhancing energy-saving effects is described. This configuration predicts power consumption for each work area usage order corresponding to the work area densities based on the following: a work area usage pattern predicted from the headcount of people present in a day, which is predicted using headcount data accumulated in headcount manager 310; weather forecast data; power consumption during operation; and weather information data accumulated along with power consumption during operation. Then, it selects a work area usage order with low predicted power consumption to enhance energy-saving effects. In this implementation example, as in Implementation Example 2, office 99 is the same as office 99 illustrated in FIG. 8.

In environmental equipment power consumption manager 351 included in environmental equipment controller 350, as illustrated in FIG. 25, for each work area pattern used in the intervals during operation, the power consumption of environmental equipment per unit time, weather information, and seasonal information corresponding to the interval are accumulated. Weather information refers to information related to weather conditions such as clear, cloudy, rain, as well as temperature, humidity, and other meteorological information. Seasonal information is determined as spring, summer, autumn, or winter, calculated from the calendar at that point in time. FIG. 26 illustrates the average power consumption for each item of weather information for each work area pattern corresponding to work area usage order aa1 when "low density" is selected in the work area table illustrated in FIG. 9, and FIG. 27 illustrates the average power consumption for each item of weather information for each work area pattern corresponding to work area usage order bb1. In this example, weather (either clear, cloudy, or rain) is used as the weather information.

In addition to the description of Implementation Example 2, headcount manager 310 performs prediction of a time-series of the headcount of people present for a day on which the system operates, using accumulated time-series headcount data and calendar information for operating days and event schedule information. A candidate for the work area usage order is selected from this predicted time-series of the headcount of people present and the system mode of operation, the work area density, and the energy-saving mode selection input by the user. In this example, we assume the system mode of operation is the "expansion and reduction mode", the work area density is "low density", and the energy-saving mode is "on". Similar to during actual operation that is illustrated in FIG. 15, intervals and work area patterns can be predicted from this information. When low density is selected, there are two work area usage orders, aa1 and bb1, so the work area patterns are predicted for each, resulting in the following. (1) aa1: P(13) --> P(13, 17) --> P(13, 17, 18) --> P(13, 17) --> P(13) (2) bb1: P(19) --> P(15, 19) --> P(14, 15, 19) --> P(15, 19) --> P(19)

In the results of the weather forecast, the weather for each interval is predicted as follows.

interval 1: clear, interval 2: cloudy, interval 3: rain, interval 4: cloudy, interval 5: clear

From FIG. 26 and FIG. 27, extracting the average power consumption corresponding to the weather forecast for each interval and aggregating the average power consumption results in the following. Wtotal(aa1) = W_P(13)(clear) + W_P(13, 17)(cloudy) + W_P(13, 17, 18)(rain) + W_P(13, 17)(cloudy) + W_P(13)(clear) Wtotal(bb1) = W_P(19)(clear) + W_P(15, 19)(cloudy) + W_P(14, 15, 19)(rain) + W_P(15, 19)(cloudy) + W_P(19)(clear)

In the work area determiner, average power consumption Wtotal(aa1) and Wtotal(bb1) of the two work area usage orders aggregated from the prediction results are compared, and the one with the lower average power consumption is selected. By determining the work area to be used in this manner, power consumption can be reduced while also responding to changes in weather conditions. Although this example does not use seasonal information, when storing data on average power consumption corresponding to each item of weather information per work area pattern illustrated in FIG. 26 and FIG. 27, by further classifying the data using seasonal information, the work area usage order can be even more appropriately predicted using information from the same season at the time of prediction for the day, thereby enhancing the advantageous effect of power consumption reduction.

### Implementation Example 4

Next, Implementation Example 4 will be described. This implementation example pertains to a case in which, in Implementation Example 1, person state measurer 311 included in headcount manager 310 determines whether an office worker is in a concentrated state or not based on person state data from externally connected sensor 391, and uses this determination result when performing work area reduction processing. For example, a camera may be used as sensor 391 provided for this purpose, and the determination of whether a subject is in a concentrated state or not may be made by image analysis of the subject captured in the photographed image, but any other existing technology may be applied. In this way, sensor 391 includes other sensing functions in addition to the function of sensing the headcount of people present in the office. Stated differently, sensor 391 is a term that comprehensively refers to a plurality of detectors, each of which includes various sensing functions. Stated differently, a certain detector included in sensor 391 is used for sensing the headcount of people present in the office, and another detector included in sensor 391 is used for sensing the state of people.

In this implementation example, when reducing work areas 98 (excluding some of current work areas 98 so that they are not included in subsequent work areas 98), the state of people within work areas 98 to be reduced is measured, and if the state of people working is measured to be a concentrated state, the work area reduction processing is suspended, thereby minimizing the impact on the office workers' work. However, when it is determined that the state has returned to normal from the concentrated state during the suspension of the reduction processing, the work area reduction processing is implemented.

The functional configuration of the office environment control system in this implementation example is the same as that illustrated in FIG. 5. Person state measurer 311 determines whether a person is in a concentrated state or not from information (for example, an image) related to the person input from sensor 391. When determining to reduce work area 98, work area determiner 340 queries person state measurer 311 about the state of people in work area 98 to be reduced, and if there is a response that a person in a concentrated state is present, suspends the reduction processing. During the suspension of the reduction processing, person state measurer 311 continues to query about the state of people in work area 98 to be reduced, and after the state changes from the concentrated state to a normal state (a state that is not a concentrated state), the reduction processing is executed. As described above, when a camera is used as sensor 391, person state measurer 311 can determine the concentrated state from a person's body movements and facial expressions.

### Implementation Example 5

Next, Implementation Example 5 will be described. This implementation example pertains to a case in which, in Implementation Example 1, user interface 321 receives user input for work area expansion or work area reduction from user input device 392. In this way, by accepting user requests when the work area is under automatic control, the system can respond to situations where the headcount of people present is greater than the measured value due to factors such as people entering together, or when the desired seat margin changes during system operation due to user circumstances, thereby improving user convenience. When operating in expansion mode, if the user determines that it is possible to reduce work area 98, energy-saving effects can be enhanced by accepting input for reducing work area 98 and implementing the reduction process. By storing the frequency of work area expansion input and increasing the seat margin when the input frequency exceeds a predetermined threshold, operation of the system that match the user's requirements can be realized, thereby improving user convenience.

FIG. 28 illustrates an example of a display screen of a user input device. The display screen of user input device 392 includes, as illustrated in FIG. 28, buttons for expanding and reducing the work area in addition to inputs for the mode of operation and density level. Upon receiving a press of a button for expanding or reducing the work area, user interface 321 issues an expansion or reduction command to work area determiner 340. In accordance with the currently selected work area usage order, in the case of expansion, work area determiner 340 increments the usage position in order by one and adds the next work area 98 in the usage order, and in the case of reduction, invalidates work area 98 in the current usage order and decrements the usage position in order by one.

The frequency of work area expansion inputs can be stored for each work area usage order, and when the frequency is high, the seat margin can also be increased. When the seat margin is increased, the resulting change is displayed on user input device 392 or display device 393 to notify the user.

### Implementation Example 6

Next, Implementation Example 6 will be described. This implementation example pertains to a case in which, in Implementation Example 2, when there is a bias in the accumulated operating time of environmental equipment, the usage order of work areas 98 is selected to reduce the bias in operating time to use the environmental equipment as evenly as possible to contribute to extending the lifespan of environmental equipment throughout office 99.

The example will be explained using office 99 illustrated in FIG. 8 used in Implementation Example 2. This example assumes that the user has input, via user interface 321, "work area expansion and reduction mode" as the system mode of operation, "low density" as the density level, and "off" as the an energy-saving mode. When, at system startup, the bias in the effective operating time of lighting equipment L and the operating time of air conditioning equipment AC is greater than or equal to a predetermined threshold value, work area determiner 340 selects a work area usage order in which potential work areas 98 to which lighting equipment L with less effective operating time or air conditioning equipment AC with less operating time belong are arranged high (early) in usage order. More specifically, when the effective operating time of lighting equipment L is as illustrated in FIG. 29 and the operating time of air conditioning equipment AC is as illustrated in FIG. 30, the effective operating time of lighting equipment L22, L23, and L24 is shorter compared to lighting equipment L1, L2, L3, and L4, and the operating time of air conditioning equipment AC2 is shorter compared to air conditioning equipment AC1. Lighting equipment L1, L2, L3, and L4, as well as air conditioning equipment AC1, belong to work area 13, and lighting equipment L22, L23, and L24, as well as air conditioning equipment AC2, belong to work area 19. Therefore, it is determined that the usage frequency of work area 19 is lower compared to the usage frequency of work area 13, and that the usage frequency of work area 19 should be increased. Referring to the work area table in FIG. 12, since the density level selected is low density, the work area usage order becomes aa1 or bb1. Since bb1 is the option where work area 19 is arranged higher (earlier) in usage order than work area 13, work area determiner selects bb1.

The function to reduce usage bias of environmental equipment in this implementation example activates when "off" is selected for the energy-saving mode (when the energy-saving mode is disabled), and deactivates when "on" is selected (when the energy-saving mode is enabled).

### Implementation Example 7

Next, Implementation Example 7 will be described. In this implementation example, the system mode of operation is either work area 98 expansion and reduction mode, or work area 98 expansion and scheduled reduction mode, that is, a mode of operation involving work area 98 reduction. The operation upon some work areas 98 being excluded (when the areas are no longer determined to be work areas 98) from the areas determined to be work areas 98 due to a decrease in the headcount of people present differs from one or more of the examples described above. More specifically, in any of the above implementation examples, work areas 98 were excluded in order starting from those with lower usage order shown in the work area table, but which work area 98 was being used by the workers whose departure caused the decrease in the headcount of people present in office 99 was not taken into consideration.

Therefore, due to the reduction of work areas 98, regardless of whether there are workers working there or not, a work area 98 may suddenly cease to be an area designated as a work area 98. Stated differently, workers who are in the middle of work may suddenly be forced to move to a designated work area 98 (i.e., from an area that has been excluded to an area that is still designated as a work area 98), or to end their work altogether.

In this implementation example, presence-absence determiner 312 (one example of an absence determiner) included in headcount manager 310 determines whether an office worker is present or absent based on presence sensing data from sensor 391 connected externally, and uses this determination when performing work area reduction processing. More specifically, based on presence sensing data, presence-absence determiner 312 determines areas where workers are absent among the areas determined to be work areas 98. For this purpose, all areas (potential work areas 98) each include a presence sensor that can perform sensing of whether a worker is absent or not. FIG. 31 is for explaining work areas in an office according to the embodiment. FIG. 31 omits the illustration of furnishings 97 from the floor plan of FIG. 1, and instead shows the positional relationship between potential work areas 98 and presence sensors S1 to S12. Presence sensors S1 to S12 are, for example, arranged one for each potential work area 98. Each of presence sensors S1 to S12 (hereinafter, simply referred to as presence sensors when there is no need to distinguish between them) is a sensor 391 for detecting whether a person is absent or present in the potential work area 98 in which it is arranged.

The presence sensors, in any case, only need to be able to detect whether a worker is present or absent in potential work areas 98; any further information such as the number of workers is not necessary. The presence sensor can therefore be implemented using an inexpensive low-resolution infrared sensor or the like.

Note that potential work areas 98 can be rearranged as explained with reference to FIG. 8. Therefore, instead of arranging one presence sensor for each potential work area 98, one presence sensor may be arranged for each furnishing 97. Stated differently, in the example of office 99 in FIG. 1, since each of the twelve potential work areas 98 includes four furnishings 97, forty-eight presence sensors may be arranged somewhere on furnishings 97.

In this implementation example, the office environment control system operates as follows. First, when the number of people decreases over a fixed period of time and the headcount of people present in office 99 reaches a number at which the number of work areas 98 may be reduced by one, presence-absence determiner 312 determines whether workers are absent or not for each work area 98 based on the detection results of the presence sensors of each work area 98. Presence-absence determiner 312 identifies work areas 98 that indicate absence of workers for a fixed period of time or longer, for example, taking into account temporary absences. Identified work areas 98 can be considered as work areas 98 that may be excluded from work areas 98 when reducing work areas 98. Therefore, before referring to the usage order in the work area table, if there are work areas 98 identified as work areas 98 that may be excluded, work area determiner 340 excludes the identified work areas 98 prior to work areas 98 that would be excluded next according to the usage order (in other words, makes these areas less likely to be designated as work areas 98 compared to other work areas 98). As a result, the identified work areas 98 change to the second environment, so energy savings for the office as a whole can be achieved while inhibiting complicating worker movement, etc.

Note that when there are a plurality of work areas 98 identified as work areas 98 that may be excluded, work areas 98 to be excluded may be determined among those identified work areas 98 according to the usage order. Work areas 98 that have been excluded from work areas 98 in this manner without considering the usage order may also be recorded as already excluded in the work area table. By doing so, reduction and expansion of work areas 98 according to usage order can continue to be performed in the work area table.

### Implementation Example 8

Next, Implementation Example 8 will be described. In this implementation example, as in Implementation Example 7, environment control of office 99 using a presence sensor and presence-absence determiner 312 will be described. Here, we focus on the second environment areas outside of work areas 98, rather than the first environment environments determined to be work areas 98. There may be instances where workers who want to do some quick work, for example, may wish to use areas outside of these work areas 98. In such cases, since the second environment is an environment not suitable for performing work, inconveniences such as work not progressing smoothly may occur even for quick tasks. In this implementation example, presence-absence determiner 312 (one example of a presence determiner) determines whether an office worker is present or absent outside work area 98 based on presence sensing data from a second environment area outside work area 98, and uses this determination for environmental control processing to secure a temporary work environment.

As described in Implementation Example 7, the presence sensors are arranged such that at least one presence sensor is provided for each potential work area 98, allowing any potential work area 98 to be determined as a work area 98. Accordingly, presence sensing results can be obtained for each potential work area 98 even in areas other than work areas 98.

In this implementation example, the office environment control system operates as follows. First, presence-absence determiner 312 determines whether a worker is present or not for each work area 98 based on the detection results of the presence sensors of each work area 98. Presence-absence determiner 312 identifies areas outside work areas 98 where a worker has been present for longer than a fixed period of time that is long enough to exclude cases such as, for example, the worker merely passing through the detection area, or the worker only stopping briefly (staying only to an extent not sufficient to be considered working). Environment controller 350 controls the environment of this area to a third environment instead of the second environment, since it is considered that the worker is performing some sort of work in the area identified in this manner, despite it being a second environment. The third environment is an environment that consumes more power than the second environment, with brightness and other factors set a degree that allows for minimal work to be performed.

As one example, as described in Implementation Example 1, the first environment has a desk surface illuminance of 500 lux, and the second environment has a desk surface illuminance of 150 lux. In contrast, the third environment has a desk surface illuminance of 300 lux, which is brighter (consumes more power) than the second environment and darker (consumes less power) than the first environment. As another example, as described in Implementation Example 1, the first environment is controlled as an air conditioning environment such that PMV = -0.5 to 0.5, more preferably PMV = 0, and the second environment is controlled as an air conditioning environment such that PMV = 0.5 to 1 (summer season), PMV = -1 to -0.5 (winter season). In contrast, the third environment is controlled as an air conditioning environment such that PMV = -0.5 to 0.5, more preferably PMV = 0, which is more comfortable (consumes more power) than the second environment, and is equivalent to (consumes about the same amount of power as) the first environment. However, control in the third environment is often transient, and moreover, it is known that in regard to the air conditioning environment, it takes time from the start of control until the effect is actually perceived by the worker. Therefore, the air conditioning environment in the third environment may be equivalent to the second environment.

After a predetermined time (for example, ten to several tens of minutes) has elapsed, or when presence-absence determiner 312 determines that the worker is absent, environment controller 350 returns the environment of this area from the third environment to the second environment. In this way, even if a worker appears who temporarily uses an area outside work areas 98 for work, it is possible to provide an environment necessary for that work. Accordingly, an effective office environment control system can be realized from the viewpoint of worker convenience.

### Advantageous Effects, etc.

As described above, an office environment control system according to a first aspect of the present embodiment includes: headcount manager 310 that counts and manages a headcount of people present in office 99; work area table manager 330 that sets potential work areas 98 in office 99, and manages a work area table including: a relationship between each of potential work areas 98 set and environmental equipment in office 99; a number of seats in each of potential work areas 98 set; and one or more sequences each of which indicates an order of usage of each of potential work areas 98 set; inputter-outputter 320 that receives a user input of a selection of a system mode of operation and a work area density; work area determiner 340 that determines one or more work areas 98 to be used from among potential work areas 98 based on the headcount of people present counted, the work area table, the system mode of operation selected by user input, and the work area density selected by user input; and environment controller 350 that controls an environment of the one or more work areas 98 determined to a first environment and controls an environment outside the one or more work areas 98 to a second environment that consumes less power than the first environment, the first environment and the second environment being predetermined.

This office environment control system can divide areas into work areas 98 to be used and areas that are not work areas 98 from among potential work areas 98 based on the counted headcount of people present, the work area table, the system mode of operation selected by user input, and the work area density selected by user input. In areas determined to be work areas 98, the environmental equipment can be controlled to produce a first environment suitable for work, for example, while in areas that are not work areas 98, the environmental equipment can be controlled to produce a second environment that consumes less power than the first environment. For example, if the second environment is set up to control the environmental equipment with the minimum necessary power consumption while taking care to not compromise the safety and comfort of office workers, energy conservation that reduces power consumption can be realized throughout the office while maintaining office worker productivity.

An office environment control system according to a second aspect is the office environment control system according to the first aspect, wherein a sequence that indicates an order of usage of the one or more work areas 98 and corresponds to a work area density is settable in the work area table.

Accordingly, when determining work areas 98, work areas 98 to be used can be determined according to a set usage order of work areas 98.

An office environment control system according to a third aspect is the office environment control system according to the first or second aspect, wherein in a pre-specified period outside of work hours, environment controller 350 reduces power consumption of both the first environment and the second environment while maintaining a relationship in which power consumption of the second environment is less than power consumption of the first environment.

Accordingly, power consumption can be further reduced during a pre-specified period outside of working hours.

An office environment control system according to a fourth aspect is the office environment control system according to any one of the first to third aspects, wherein environment controller 350 controls air conditioning equipment AC to achieve a PMV in the first environment that is within a range of -0.5 to 0.5, inclusive.

Accordingly, in the first environment, an air conditioning environment suitable for work can be realized with a PMV that is within a range of -0.5 to 0.5, inclusive.

An office environment control system according to a fifth aspect is the office environment control system according to any one of the first to fourth aspects, wherein work area determiner 340 uses a maximum value of the headcount of people present measured from a start of control for a day as a headcount for determining the one or more work areas 98.

Accordingly, by using only the maximum value of the headcount of people present, work areas can be prevented from being inadvertently reduced.

An office environment control system according to a sixth aspect is the office environment control system according to any one of the first to fourth aspects, wherein when the headcount of people present continues to decrease over a predetermined fixed period of time, work area determiner 340 uses the headcount of people present after the decrease as a headcount for determining the one or more work areas 98.

Accordingly, by using the headcount of people present after a decrease, only work areas 98 within an optimal range at that point in time are controlled to the first environment, and areas that are no longer work areas 98 due to the reduction are controlled to the second environment, thereby achieving a reduction in power consumption.

An office environment control system according to a seventh aspect is the office environment control system according to any one of the first to fourth aspects, wherein when, at a predetermined specific time, work area determiner 340 observes a continuous decrease in the headcount of people present over a predetermined fixed period of time, work area determiner 340 uses the headcount of people present after the continuous decrease as a headcount for determining the one or more work areas 98.

Accordingly, when a specific time is reached, by using the headcount of people present after a decrease, only work areas 98 within an optimal range at that point in time are controlled to the first environment, and after the specific time, areas that are no longer work areas 98 due to the reduction are controlled to the second environment, thereby achieving a reduction in power consumption.

An office environment control system according to an eighth aspect is the office environment control system according to any one of the first to seventh aspects, wherein inputter-outputter 320 includes user interface 321, user interface 321 is configured to receive an input to enable or disable an energy-saving mode, environment controller 350 includes environmental equipment power consumption manager 351, when the office environment control system is operating, environmental equipment power consumption manager 351 calculates power consumption per unit time for each work area pattern, calculates average power consumption for each work area pattern sequence, and accumulates calculation results, the work area pattern being a used pattern of the one or more work areas 98, the work area pattern sequence being a sequence of work area patterns arranged in order of usage, and work area determiner 340 determines the one or more work areas 98 based on the headcount of people present counted, the work area table, the work area density selected, whether the energy-saving mode is enabled or disabled, and how low the average power consumption of the work area pattern sequence is.

Accordingly, work area 98 can be determined more appropriately based on the headcount of people present counted, the work area table, the work area density selected, whether the energy-saving mode is enabled or disabled, and how low the average power consumption of the work area pattern sequence is.

An office environment control system according to a ninth aspect is the office environment control system according to the eighth aspect, wherein when the office environment control system is operating, headcount manager 310 accumulates time-series data of the headcount of people present, environmental equipment power consumption manager 351: for each of the work area patterns used in a past operation of the office environment control system, accumulates data linking the average power consumption with weather information and seasonal information corresponding to the past operation; and predicts, based on the selected work area density and whether the energy-saving mode is enabled or disabled, an order of usage of the one or more work areas 98 by headcount manager 310 predicting a time-series of the headcount of people present, extracts, from the data accumulated, data corresponding to the order of usage of the one or more work areas 98 predicted, and predicts power consumption based on the data extracted, current weather forecast information, and current seasonal information, and work area determiner 340 determines the one or more work areas 98 based on the headcount of people present counted, the work area table, the work area density selected, whether the energy-saving mode is enabled or disabled, and how low the predicted power consumption of the work area pattern sequence is.

Accordingly, work area 98 can be determined more appropriately based on the headcount of people present counted, the work area table, the work area density selected, whether the energy-saving mode is enabled or disabled, and how low the predicted power consumption of the work area pattern sequence is. Here, for how low the predicted power consumption of the work area pattern sequence is, power consumption under conditions similar to the current day can be applied based on data linking the average power consumption for each work area pattern with weather information and seasonal information corresponding to a past operation, thereby making it possible to determine an appropriate work area 98 with higher accuracy.

An office environment control system according to a tenth aspect is the office environment control system according to any one of the first to ninth aspects, wherein inputter-outputter 320 includes control effectiveness presenter 322, environment controller 350 includes environmental equipment power consumption manager 351, and control effectiveness presenter 322 presents at least one of: at least one of a power consumption amount or a power reduction amount of each item of the environmental equipment at each of points in time accumulated in environmental equipment power consumption manager 351; a time-series progression of at least one of a power consumption amount or a power reduction amount; or at least one of a future power consumption amount or a future power reduction amount.

Accordingly, control effectiveness presenter 322 can present at least one of: at least one of a power consumption amount or a power reduction amount; a time-series progression of at least one of a power consumption amount or a power reduction amount; or at least one of a future power consumption amount or a future power reduction amount.

An office environment control system according to an eleventh aspect is the office environment control system according to any one of the first to tenth aspects, wherein inputter-outputter 320: includes user interface 321; and displays the one or more work areas 98 determined by work area determiner 340 on user input device 392 controlled by user interface 321.

Accordingly, the user can visually confirm determined work areas 98 from images and the like displayed on user input device 392.

An office environment control system according to a twelfth aspect is the office environment control system according to the tenth aspect, wherein the environment control system displays the one or more work areas 98 determined by work area determiner 340 on display device 393 controlled by control effectiveness presenter 322.

Accordingly, the user can visually confirm determined work areas 98 from images and the like displayed on display device 393.

An office environment control system according to a thirteenth aspect is the office environment control system according to the sixth or seventh aspect, wherein work area determiner 340 performs an update process that updates the one or more work areas 98 determined, headcount manager 310 includes person state measurer 311, when determining the one or more work areas 98 when there is a decrease in the headcount of people present, person state measurer 311 determines whether a worker within a range defined by the one or more work areas 98 is in a concentrated state based on a measurement taken within the range defined by the one or more work areas 98 by sensor 391, and when the worker within the range defined by the one or more work areas 98 is determined to be in a concentrated state, work area determiner 340 suspends the update process of the one or more work areas 98.

Accordingly, when an office worker is performing work in a concentrated state in a work area 98 scheduled for reduction, the reduction of that work area 98 can be suspended so as not to interfere with the work of that office worker.

An office environment control system according to a fourteenth aspect is the office environment control system according to any one of the first to thirteenth aspects, wherein inputter-outputter 320 includes user interface 321, user interface 321 is configured to receive user input for expansion and reduction of the one or more work areas 95, when user interface 321 receives an input for expansion of the one or more work areas 98, work area determiner 340 expands the one or more work areas 98 to be used by determining to use up to and including work area 98 that is next in order after a current position in a selected order of usage of the one or more work areas 98, and when user interface 321 receives an input for reduction of the one or more work areas 98, work area determiner 340 reduces the one or more work areas 98 to be used by determining to use only up to work area 98 that is one position before the current position in the selected order of usage of the one or more work areas 98.

Accordingly, work areas 98 can be manually expanded and reduced by input from the user.

An office environment control system according to a fifteenth aspect is the office environment control system according to the fourteenth aspect, wherein the office environment control system stores a count of inputs received for expansion of the one or more work areas 98, and when the count exceeds a predetermined count, increases the seat margin that is set for each of the one or more work areas 98.

Accordingly, based on the count of inputs received for expansion of work areas 98 in the past, work areas 98 that are better suited to users in that office can be determined.

An office environment control system according to a sixteenth aspect is the office environment control system according to any one of the first to fifteenth aspects, wherein environment controller 350 includes environmental equipment power consumption manager 351, and work area determiner 340 references an operating time of each item of environmental equipment managed by environmental equipment power consumption manager 351, and so selects an order of usage of the one or more work areas 98 and determines the one or more work areas 98 as to reduce a bias in the operating time of each item of the environmental equipment, the order of usage of the one or more work areas 98 being selected from among orders of usage of the one or more work areas 98 in the work area table that correspond to the work area density selected.

Accordingly, work areas 98 can be determined to reduce the bias in operating time of environmental equipment.

An office environment control system according to a seventeenth aspect is the office environment control system according to the sixth or seventh aspect, wherein work area determiner 340 performs an update process that updates the one or more work areas 98 determined, the office environment control system includes an absence determiner (presence-absence determiner 312), when determining the one or more work areas 98 when there is a decrease in the headcount of people present, the absence determiner determines a work area 98 where no worker is present among the one or more work areas 98 that are currently determined, based on a measurement taken within a range defined by the one or more work areas 98 by sensor 391, and work area determiner 340 performs an update process of the one or more work areas 98 that includes making the work area 98 determined to have no worker present among the one or more work areas 98 that are currently determined less likely to be determined as the one or more work areas 98 compared to other work areas 98.

Accordingly, energy savings for the office as a whole can be achieved while inhibiting complicating worker movement, etc.

An office environment control system according to an eighteenth aspect is the office environment control system according to any one of the first to seventeenth aspects, wherein the office environment control system includes a presence determiner (presence-absence determiner 312), the presence determiner determines a potential work area 98 where a worker is present from among the potential work areas 98 not determined as the one or more work areas 98, based on measurements taken within ranges defined by the potential work areas 98 not determined as the one or more work area 98 by a sensor, and environment controller 350 controls an environment of an area corresponding to the potential work area 98 determined to have a worker present among areas excluding the one or more work areas 98 to a third environment that consumes more power than the second environment, instead of the second environment.

Accordingly, it is possible to provide an environment necessary for work, and thus an effective office environment control system can be realized from the viewpoint of worker convenience.

An office environment control method according to a nineteenth aspect of the present embodiment includes: counting and managing a headcount of people present in office 99; setting potential work areas 98 in office 99, and managing a work area table including: a relationship between each of potential work areas 98 set and environmental equipment in office 99; a number of seats in each of potential work areas 98 set; and one or more sequences each of which indicates an order of usage of each of potential work areas 98 set; receiving a user input of a selection of a system mode of operation and a work area density; determining one or more work areas 98 to be used from among potential work areas 98 based on the headcount of people present counted, the work area table, the system mode of operation selected by user input, and the work area density selected by user input; and controlling an environment of the one or more work areas 98 determined to a first environment and controlling an environment outside the one or more work areas 98 to a second environment that consumes less power than the first environment, the first environment and the second environment being predetermined.

Accordingly, the same effects as the office environment control system described above can be achieved.

A program according to a twentieth aspect of the present embodiment is a program for causing a computer to execute the office environment control method described above.

Accordingly, the same effects as the office environment control system described above can be achieved using a computer.

### OTHER EMBODIMENTS

Hereinbefore, the office environment control system and the like according to the present disclosure have been described based on the above embodiment, but the present disclosure is not limited to the above embodiment.

In the above embodiment, processing performed by a particular processing unit may be performed by a different processing unit. The order of the plurality of processes may be changed, or the plurality of processes may be executed in parallel. In the above embodiment, the allocation of elements of the office environment control system to the devices is merely one example. For example, an element included in one device may be included in another device.

For example, the processing described in the above embodiment may be realized by centralized processing using a single device (system), or may be realized by distributed processing using a plurality of devices. The processor that executes the program described above may be a single processor or a plurality of processors. Stated differently, the processing may be centralized or distributed.

In the above embodiment, all or part of the elements such as the controller may be configured using dedicated hardware, or may be implemented by executing a software program suitable for each element. Each element may be implemented by a program execution unit such as a central processing unit (CPU) or processor reading and executing a software program recorded on a recording medium such as HDD or semiconductor memory.

The elements such as the controller may be configured of one or more electronic circuits. The one or more electronic circuits may each be a general-purpose circuit or a dedicated circuit.

The one or more electronic circuits may include, for example, a semiconductor device, IC, or an LSI circuit. The IC or LSI circuit may be integrated on a single chip, or may be integrated on a plurality of chips. Although these circuits are referred to as IC or LSI circuit here, the terminology may change depending on the degree of integration, and these circuits may be called system LSI circuit, a very large scale integrated (VLSI) circuit, or an ultra large scale integrated (ULSI) circuit. A field programmable gate array (FPGA) that is programmed after manufacturing the LSI circuitry can be used for the same purpose.

General or specific aspects of the present disclosure may be realized as a system, an apparatus or device, a method, an integrated circuit, or a computer program. Alternatively, the computer program may be realized on a computer-readable non-transitory recording medium such as an optical disc, an HDD, or semiconductor memory. Any given combination of a system, an apparatus or device, a method, an integrated circuit, a computer program, and a recording medium may be used to realize the aspects.

Embodiments arrived at by a person skilled in the art making various modifications to any one of the embodiments, or embodiments realized by arbitrarily combining elements and functions in the embodiments which do not depart from the essence of the present disclosure are also included in the present disclosure.

### [Reference Signs List]

1, 2, 3, 4, 5, 6, 7, 8, 9, 10, 11, 12, 13, 14, 15, 16, 17, 18, 19 work area
95 exit card reader
96 entry card reader
97 furnishing
98 potential work area (work area)
99 office
300 controller
310 headcount manager
311 person state measurer
312 presence-absence determiner
320 inputter-outputter
321 user interface
322 control effectiveness presenter
330 work area table manager
340 work area determiner
350 environment controller
351 environmental equipment power consumption manager
391 sensor
392 user input device
393 display device
AC, AC1, AC2 air conditioning equipment
L, L1, L2, L3, L4, L5, L6, L7, L8, L9, L10, L11, L12, L13, L14, L15, L16, L17, L18, L19, L20, L21, L22, L23, L24 lighting equipment

## Claims

1. An office environment control system comprising:
a headcount manager that counts and manages a headcount of people present in an office;
a work area table manager that sets potential work areas in the office, and manages a work area table including: a relationship between each of the potential work areas set and environmental equipment in the office; a number of seats in each of the potential work areas set; and one or more sequences each of which indicates an order of usage of each of the potential work areas set;
an inputter-outputter that receives a user input of a selection of a system mode of operation and a work area density;
a work area determiner that determines one or more work areas to be used from among the potential work areas based on the headcount of people present counted, the work area table, the system mode of operation selected by user input, and the work area density selected by user input; and
an environment controller that controls an environment of the one or more work areas determined to a first environment and controls an environment outside the one or more work areas to a second environment that consumes less power than the first environment, the first environment and the second environment being predetermined.

2. The office environment control system according to claim 1, wherein
a sequence that indicates an order of usage of the one or more work areas and corresponds to a work area density is settable in the work area table.

3. The office environment control system according to claim 1, wherein
in a pre-specified period outside of work hours, the environment controller reduces power consumption of both the first environment and the second environment while maintaining a relationship in which power consumption of the second environment is less than power consumption of the first environment.

4. The office environment control system according to claim 1, wherein
the environment controller controls air conditioning equipment to achieve a predicted mean vote (PMV) in the first environment that is within a range of -0.5 to 0.5, inclusive.

5. The office environment control system according to claim 1, wherein
the work area determiner uses a maximum value of the headcount of people present measured from a start of control for a day as a headcount for determining the one or more work areas.

6. The office environment control system according to claim 1, wherein
when the headcount of people present continues to decrease over a predetermined fixed period of time, the work area determiner uses the headcount of people present after the decrease as a headcount for determining the one or more work areas.

7. The office environment control system according to claim 1, wherein
when, at a predetermined specific time, the work area determiner observes a continuous decrease in the headcount of people present over a predetermined fixed period of time, the work area determiner uses the headcount of people present after the continuous decrease as a headcount for determining the one or more work areas.

8. The office environment control system according to claim 1, wherein
the inputter-outputter includes a user interface,
the user interface is configured to receive an input to enable or disable an energy-saving mode,
the environment controller includes an environmental equipment power consumption manager,
when the office environment control system is operating, the environmental equipment power consumption manager calculates power consumption per unit time for each work area pattern, calculates average power consumption for each work area pattern sequence, and accumulates calculation results, the work area pattern being a used pattern of the one or more work areas, the work area pattern sequence being a sequence of work area patterns arranged in order of usage, and
the work area determiner determines the one or more work areas based on the headcount of people present counted, the work area table, the work area density selected, whether the energy-saving mode is enabled or disabled, and how low the average power consumption of the work area pattern sequence is.

9. The office environment control system according to claim 8, wherein
when the office environment control system is operating, the headcount manager accumulates time-series data of the headcount of people present,
the environmental equipment power consumption manager:
for each of the work area patterns used in a past operation of the office environment control system, accumulates data linking the average power consumption with weather information and seasonal information corresponding to the past operation; and
predicts, based on the work area density selected and whether the energy-saving mode is enabled or disabled, an order of usage of the one or more work areas by the headcount manager predicting a time-series of the headcount of people present, extracts, from the data accumulated, data corresponding to the order of usage of the one or more work areas predicted, and predicts power consumption based on the data extracted, current weather forecast information, and current seasonal information, and
the work area determiner determines the one or more work areas based on the headcount of people present counted, the work area table, the work area density selected, whether the energy-saving mode is enabled or disabled, and how low the predicted power consumption of the work area pattern sequence is.

10. The office environment control system according to claim 1, wherein
the inputter-outputter includes a control effectiveness presenter,
the environment controller includes an environmental equipment power consumption manager, and
the control effectiveness presenter presents at least one of: at least one of a power consumption amount or a power reduction amount of each item of the environmental equipment at each of points in time accumulated in the environmental equipment power consumption manager; a time-series progression of at least one of a power consumption amount or a power reduction amount; or at least one of a future power consumption amount or a future power reduction amount.

11. The office environment control system according to claim 1, wherein
the inputter-outputter:
includes a user interface; and
displays the one or more work areas determined by the work area determiner on a user input device controlled by the user interface.

12. The office environment control system according to claim 10, wherein
the environment control system displays the one or more work areas determined by the work area determiner on a display device controlled by the control effectiveness presenter.

13. The office environment control system according to claim 6 or 7, wherein
the work area determiner performs an update process that updates the one or more work areas determined,
the headcount manager includes a state measurer,
when determining the one or more work areas when there is a decrease in the headcount of people present, the state measurer determines whether a worker within a range defined by the one or more work areas is in a concentrated state based on a measurement taken within the range defined by the one or more work areas by a sensor, and
when the worker within the range defined by the one or more work areas is determined to be in a concentrated state, the work area determiner suspends the update process of the one or more work areas.

14. The office environment control system according to claim 1, wherein
the inputter-outputter includes a user interface,
the user interface is configured to receive user input for expansion and reduction of the one or more work areas,
when the user interface receives an input for expansion of the one or more work areas, the work area determiner expands the one or more work areas to be used by determining to use up to and including a work area that is one position after a current position in a selected order of usage of the one or more work areas, and
when the user interface receives an input for reduction of the one or more work areas, the work area determiner reduces the one or more work areas to be used by determining to use only up to a work area that is one position before the current position in the selected order of usage of the one or more work areas.

15. The office environment control system according to claim 14, wherein
the office environment control system stores a count of inputs received for expansion of the one or more work areas, and when the count exceeds a predetermined count, increases a seat margin that is set for each of the one or more work areas.

16. The office environment control system according to claim 1, wherein
the environment controller includes an environmental equipment power consumption manager, and
the work area determiner references an operating time of each item of environmental equipment managed by the environmental equipment power consumption manager, and so selects an order of usage of the one or more work areas and determines the one or more work areas as to reduce a bias in the operating time of each item of the environmental equipment, the order of usage of the one or more work areas being selected from among orders of usage of the one or more work areas in the work area table that correspond to the work area density selected.

17. The office environment control system according to claim 6 or 7, wherein
the work area determiner performs an update process that updates the one or more work areas determined,
the office environment control system includes an absence determiner,
when determining the one or more work areas when there is a decrease in the headcount of people present, the absence determiner determines a work area where no worker is present among the one or more work areas that are currently determined, based on a measurement taken within a range defined by the one or more work areas by a sensor, and
the work area determiner performs an update process of the one or more work areas that includes making the work area determined to have no worker present among the one or more work areas that are currently determined less likely to be determined as the one or more work areas compared to other work areas.

18. The office environment control system according to claim 1, wherein
the office environment control system includes a presence determiner,
the presence determiner determines a potential work area where a worker is present from among the potential work areas not determined as the one or more work areas, based on measurements taken within ranges defined by the potential work areas not determined as the one or more work area by a sensor, and
the environment controller controls an environment of an area corresponding to the potential work area determined to have a worker present among areas excluding the one or more work areas to a third environment that consumes more power than the second environment, instead of the second environment.

19. An office environment control method comprising:
counting and managing a headcount of people present in an office;
setting potential work areas in the office, and managing a work area table including: a relationship between each of the potential work areas set and environmental equipment in the office; a number of seats in each of the potential work areas set; and one or more sequences each of which indicates an order of usage of each of the potential work areas set;
receiving a user input of a selection of a system mode of operation and a work area density;
determining one or more work areas to be used from among the potential work areas based on the headcount of people present counted, the work area table, the system mode of operation selected by user input, and the work area density selected by user input; and
controlling an environment of the one or more work areas determined to a first environment and controlling an environment outside the one or more work areas to a second environment that consumes less power than the first environment, the first environment and the second environment being predetermined.

20. A program for causing a computer to execute the office environment control method according to claim 19.
